# EUROPÄISCHE PATENTSCHRIFT

(11) **EP 1 134 462 B1**
(45) Veröffentlichungstag und Bekanntmachung des Hinweises auf die Patenterteilung: **12.01.2005**
(21) Anmeldenummer: 01104962.4
(22) Anmeldetag: 01.03.2001
(51) Int. Cl.: F16J 15/00, F16J 15/34

(54) **Wellenabdichtung**
Shaft seal
Joint d'étanchéité pour arbre tournant

(30) Priorität: 17.03.2000 DE 10013154
(43) Veröffentlichungstag der Anmeldung: 19.09.2001
(73) Patentinhaber: KSB Aktiengesellschaft, 67227 Frankenthal (DE)
(72) Erfinder: Hamkins, Christopher, 67549 Worms (DE)

(56) Entgegenhaltungen:
- EP-A- 0 411 804
- DE-A- 4 217 609
- GB-A- 593 255
- US-A- 4 094 512
- US-A- 4 552 368
- US-A- 5 562 294

## Beschreibung

Die Erfindung betrifft eine Wellenabdichtung, bestehend aus einer Hauptdichtung, insbesondere einer Gleitringdichtung, und einer nachgeordneten Hilfsdichtung, wobei die Hilfsdichtung beim Versagen der Hauptdichtung eine Dichtfunktion übernimmt, die Hilfsdichtung als ein axial verschiebbares, die Welle umgebendes Element ausgebildet ist und unter dem Druck des abzusperrenden Fluids dichtend an einem Gehäuseteil anliegt.

Durch die DE-A-42 17 609 ist eine Wellendurchführung bekannt, deren Aufbau beim Ausfall einer Gleitringdichtung eine aus dem Aggregat austretende Leckagemenge begrenzt. Zu diesem Zweck ist der Gleitringdichtung eine spezielle Drosselbuchse nachgeordnet, mit deren Drosselspalt die Menge einer dadurch austretenden Leckage begrenzt wird. Zusätzlich gehen von einem Zwischenraum, in den eine Leckage nach Passieren der beschädigten Gleitringdichtung eintritt, druckführende Kanäle ab. Diese Kanäle übertragen einen im Zwischenraum ansteigenden Druck in eine Ringkammer, in der ein O-Ring belagert ist. Steigt im Zwischenraum aufgrund des Versagens der als Hauptdichtung wirkenden Gleitringdichtung der Druck an, so wird dieser in die Ringkammer mit dem O-Ring übertragen und preßt diesen nach einer kurzen Axialverschiebung dichtend gegen eine Wandfläche eines gegenüberliegenden Gehäuseabschnittes. Damit wird eine den Drosselspalt passierende Leckagemenge daran gehindert, radial nach außen abzufließen. Um einen Abfluß der Leckagemenge entlang der Welle zu verhindern, ist zusätzlich und hinter der O-Ringdichtung zwischen Welle und Gehäuse eine weitere Dichtung in Form eines Lippendichtrings angeordnet.

Diese Lösung verwendet primär einen Drosselspalt zur Begrenzung der Leckagemenge. Somit kann zwar bei einem Ausfall der Gleitringdichtung die austretende Leckagemenge begrenzt werden, sie wird damit aber keinesfalls ausgeschlossen. Insofern ist eine solche Abdichtung für gefährliche Medien nicht geeignet. Dies wird auch nicht dadurch verbessert, daß zusätzlich zu der Drosselbuchse durch einen axial zu verschiebenden O-Ring die Dichtwirkung verbessert werden soll. Zum Verschieben des O-Ringes ist ein relativ hoher Druck erforderlich, bis zu dessen Erreichen bereits eine Leckage aus dem Drosselspalt austritt. Wenn der O-Ring infolge einer längeren Verweildauer in seinem Ringraum dort anhaftet, so behindert dies eine Axialverschiebung in erheblichem Maße und begünstigt den Austritt einer Leckage durch den Drosselspalt.

Eine andere Lösung zeigt die Stillstandsdichtung gemäß der DE-C-34 15 902. Diese verwendet eine Rutschkupplung, mit der eine abhebbare Dichtfläche einer Stillstandsdichtung während des Betriebes verschoben wird und ein Dichtspalt geöffnet bleibt. Beim normalen Betrieb eines damit ausgerüsteten Aggregates, dort einer Pumpe, findet keine Berührung an der Dichtfläche und damit kein Verschleiß oder Reibungsverlust statt. Diese Stillstandsdichtung wird erst dann aktiviert, wenn das Aggregat abgeschaltet wird und zum dichtenden Betrieb während eines Stillstandes die Dichtfläche geschlossen wird. In diesem Fall unterliegt die Rutschkupplung einer Relativbewegung mit Reibungsverlusten. Diese Stillstandsdichtung dient zum An- oder Abfahren einer Pumpe mit hydrodynamischer Wellenabdichtung. Zur Betätigung der Stillstandsdichtung sind zusätzliche Zwangsmittel erforderlich, beispielsweise Elektromagneten, Fliehkraftgewichte oder eine externe Drucksteuerung, mit denen die Dichtung im Bedarfsfall betätigt wird.

Der Erfindung liegt das Problem zugrunde, für Wellenabdichtungen eine einfach aufgebaute und zuverlässig reagierende Hilfsdichtung zu entwickeln, die in einem Störfall beim Ausfall einer als Hauptdichtung wirkenden Wellenabdichtung ein sicheres Abschalten eines damit ausgerüsteten Aggregates gewährleistet.

Die Lösung dieses Problems sieht vor, daß die Hilfsdichtung als ein mit der Welle rotierendes, scheibenförmiges Element ausgebildet ist, daß zwischen einem Außendurchmesser des scheibenförmigen Elementes und einem umgebenden Raum ein enger Drosselspalt ausgebildet ist und daß das scheibenförmige Element unter einer Druckbelastung relativ zur Welle axial verschieblich gleitet und dichtend an einer Wandfläche des Raumes anliegt. Mittels dieser Lösung ergeben sich mehrere Vorteile. Das mit der Welle, mit einer Wellenschutzhülse oder dergleichen rotierende scheibenförmige Element verfügt aufgrund der gewählten Scheibenform über eine große ringförmige Fläche. Beim normalen Betrieb, d.h. bei funktionierender Hauptdichtung, bleibt das scheibenförmige Element an seinem Montageort und rotiert innerhalb des umgebenden Raumes. Zwischen einem Außendurchmesser des scheibenförmigen Elementes und einer dem Außendurchmesser gegenüberliegenden Wandfläche ist ein möglichst geringer radialer Abstand vorgegeben. Im normalen Betrieb rotiert das scheibenförmige Element in diesem Raum ohne Berührung, wodurch Reibungsverluste vermieden werden.

Bei einem Ausfall der Wellenabdichtung, die gewöhnlich als Gleitringdichtung ausgebildet ist, entsteht eine Leckage, die in den Raum einströmt, in dem das scheibenförmige Element rotiert. Aufgrund des kleinen radialen Spaltes am Außendurchmesser des scheibenförmigen Elementes stellt sich am Spalt ein Durchflußwiderstand ein, wodurch in dem der Wellendichtung zugekehrten Raumteil zwischen Wellenabdichtung und Scheibe ein Druckanstieg stattfindet. Bedingt durch die große Ringfläche bewirkt selbst ein geringer Druckanstieg eine große Kraft und dadurch ein leichtes Verschieben des scheibenförmigen Elementes von der Wellenabdichtung weg und hin zur dichtenden Anlage an eine den Raum begrenzende Wandfläche. Je nach Ausbildung des axial verschieblichen Abschnittes zwischen dem scheibenförmigen Element und der rotierenden Welle erfolgt in diesem Bereich oder im Bereich der Dichtfläche eine Relativbewegung. Eine dazwischen existierende Dichtung verhindert aber im Schadensfall für eine ausreichend lange Zeitdauer einen Austritt der Leckageflüssigkeit und erlaubt ein gefahrloses Stillsetzen eines mit einer solchen Wellenabdichtung ausgestatteten Aggregates.

Eine Ausgestaltung der Erfindung sieht vor, daß zwischen dem scheibenförmigen Element und der gegenüberliegenden Wandfläche des Raumes eine Weichdichtung angeordnet ist. Diese Weichdichtung kann als ein mit einfachen Mitteln in der Wandfläche des Raumes gehaltener O-Ring ausgebildet sein. Ebenso gut ist es möglich, ein weichdichtendes Material am scheibenförmigen Element anzubringen. Dies ist abhängig von den abzudichtenden Fluiden und den Temperaturen.

Nach einer weiteren Ausgestaltung der Erfindung ist das scheibenförmige Element mit einem Gleitsitz auf der Welle oder einem darauf angeordneten Zwischenteil befestigt. Dieser Gleitsitz gewährleistet die Beibehaltung der Einbauposition im Normalbetrieb und ermöglicht beim Druckanstieg eine Axialverschiebung innerhalb des Raumes, in dem das scheibenförmige Element rotiert.

Zu diesem Zweck kann nach einer anderen Ausgestaltung der Erfindung zwischen scheibenförmigem Element und rotierendem Bauteil ein reibschlüssig anliegender Dichtring als Gleitsitz Verwendung finden.

Weiterhin ist es möglich, innerhalb des Raumes eine Drucküberwachung anzuordnen, um eine zusätzliche Sicherheit zur Früherkennung eines Ausfalles der Hauptdichtung zu erhalten.

Das scheibenförmige Element ist gleichzeitig als Spritzring ausgebildet, so daß für diejenigen Betriebssituationen, bei denen sich zwar eine Leckage einstellt, aber noch kein Druckanstieg innerhalb des Raumes erfolgt, auf die übliche Verwendung eines Spritzringes verzichtet werden kann. Das scheibenförmige Element übt in einem solchen Betriebszustand die Funktion eines Spritzringes aus und schleudert dabei eine etwaige Leckage nach außen und verhindert, daß sie in die Lagerung gelangt. Für solche Betriebszustände existiert eine an sich bekannte Leckageabführung, mit deren Hilfe eine kontrollierte Leckageabfuhr möglich ist.

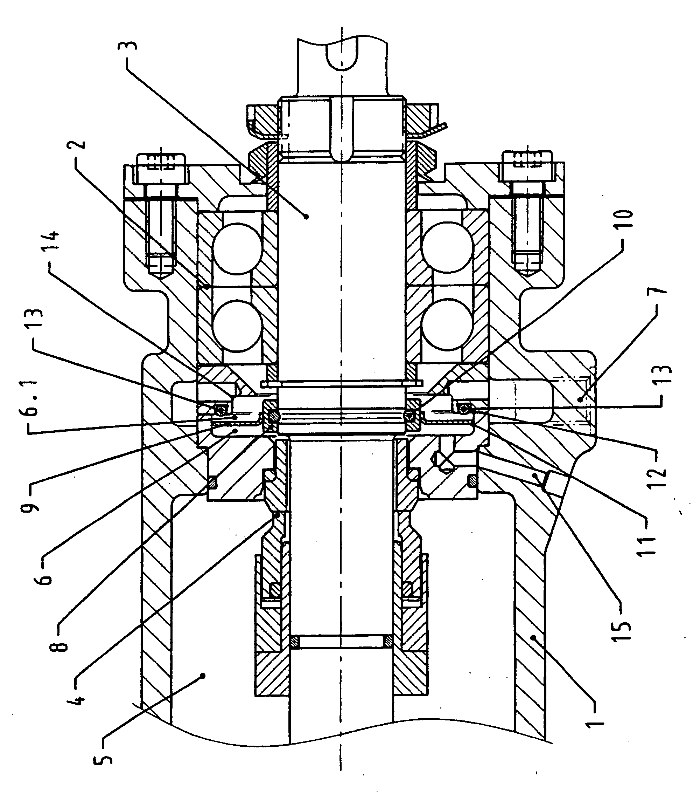

Ein Ausführungsbeispiel der Erfindung ist in der Zeichnung dargestellt und wird im folgenden näher beschrieben.

In der Figur ist ein Dichtungsgehäuse 1 mit integrierter Lagerung 2 für eine abzudichtende Welle 3 gezeigt. Die Abdichtungsfunktion übernimmt hierbei eine Gleitringdichtung 4, die in einem Dichtungsraum 5 angeordnet ist. Dem Dichtungsraum 5 nachgeordnet ist ein Raum 6, in dem eine Leckage gesammelt und von dem aus durch einen Anschluß 7 eine kontrollierte Abfuhr einer geringfügigen Leckage sichergestellt wird. Mit der Welle 3 rotiert eine Halterung 8, auf der ein scheibenförmiges Element 9 befestigt ist. Die Halterung 8 ist mit der Welle 3 so verbunden, daß die Rotationskräfte auf das scheibenförmige Element 9 übertragen werden. Zu diesem Zweck ist im Ausführungsbeispiel innerhalb der Halterung 8 ein Dichtungsring 10 angeordnet, dessen Reibungskräfte für die Drehmomentübertragung ausreichend sind.

Zwischen dem Außendurchmesser des scheibenförmigen Elementes 9 und dem Innendurchmesser des Raumes 6 besteht ein minimaler Spalt 11. Die Abmessungen zwischen diesen beiden Teilen sind so gewählt, daß ein Anlaufen zwischen den beiden Teilen verhindert wird. Auf der in der Zeichnung rechten Seite des Raumes 6 ist in der dem scheibenförmigen Element 9 gegenüberliegenden Wandfläche 12 ein Dichtungselement 13 angeordnet.

Die Funktionsweise der Hilfsdichtung ist wie folgt: Im normalen Betrieb einer Gleitringdichtung treten aus dieser ganz geringfügige Mengen aus, die normalerweise verdampfen. Solche zulässigen Leckagemengen können in den Raum 6 kondensieren und von dort durch den Abfluß 7 kontrolliert entsorgt werden. Im vorliegenden Fall übernimmt das scheibenförmige Element 9 innerhalb des Raumes 6 gleichzeitig die Funktion eines sogenannten Spritzringes. Dieser erzeugt bei einer angesammelten größeren Menge während des Betriebes innerhalb des Raumes 6 einen rotierenden Flüssigkeitsring, der ein Überströmen einer solchen Leckage in ein nachgeordnetes Lager verhindert.

Bei einem Ausfall der Gleitringdichtung 4 entsteht eine mehr oder weniger große Leckage. Bei geringen Leckagemengen sammelt sich diese innerhalb des Raumes 6 und wird durch das als Spritzring wirkende scheibenförmige Element 9 am Austreten gehindert. Bei einer Leckagemenge jedoch, aufgrund derer im Raum 6 ein Druckanstieg erfolgt, der durch den höheren Druck im Dichtungsraum 5 bedingt ist, ergibt sich folgendes: Der im Raum 6 ansteigende Druck wirkt gleichmäßig auf alle begrenzenden Wandflächen ein. Da zwischen dem scheibenförmigen Element 9 und der Wandfläche des Leckageraumes 6 ein sehr enger Spalt 12 ausgebildet ist, wirkt dieser gleichzeitig als Drosselspalt. Somit baut sich der Druck auf der anderen Seite des scheibenförmigen Elementes 9, im Raum 6.1, wesentlich langsamer auf. Da die in axialer Richtung projizierbare Fläche des scheibenförmigen Elementes 9 und der Halterung 8 sehr groß ist, ergibt sich auch bei geringen Druckanstiegen im Raum 6 eine starke Kraftkomponente. Diese Kraftkomponente bewirkt eine Axialverschiebung des scheibenförmigen Elementes 9 und der Halterung 8 von der Gleitringdichtung 4 weg. Die Halterung 8 ist daher so ausgelegt, daß mit geringen Kräften auf der Welle 3 eine Axialverschiebung stattfinden kann. Durch die Axialverschiebung gelangt das scheibenförmige Element 9 in eine dichtende Anlage am Dichtungselement 13. Damit wird ein Abfluß einer Leckage aus dem Raum 6, 6.1 durch die Abflußöffnung 14 unterbunden. Entsprechend der im Raum 6 wirkenden Druckkräfte wird das scheibenförmige Element 9 mehr oder weniger stark gegen das Dichtungselement 13 gepreßt. In einem solchen Fall tritt dann eine Relativbewegung zwischen der Halterung 8 und der Welle 3 auf, die für eine kurze Betriebsdauer für eine ausreichende Dichtungswirkung bei vorhandener Rotationsbewegung sorgt. Eine solche Hilfsdichtung hat nur die Funktion einer Notfalldichtung und ist nicht für den Dauerbetrieb ausgelegt. In dem Raum 6 kann daher zusätzlich eine Überwachungseinrichtung 15 angeordnet sein, die bei einem Druckanstieg ein entsprechendes Signal erzeugt, mit dessen Hilfe und unter Verwendung zusätzlicher Einrichtungen ein Alarm ausgelöst oder eine Abschaltfunktion bewirkt werden kann.

Diese Hilfsdichtung hat den zusätzlichen Vorteil, daß sie für die Dauer einer üblichen Notabschaltung zuverlässig abdichtet und darüber hinaus im Stillstand einer damit ausgerüsteten Maschine als statische Dichtung auch für eine längere Zeitdauer einwandfrei funktioniert. Der in der Halterung 8 montierte Dichtring 10 übernimmt dann die Abdichtung des Spaltes zwischen der Welle 3 und der Halterung 8. Die Halterung 8 kann auch in einer anderen als der hier gezeigten Ausführungsform ausgebildet sein. Wesentlich ist dabei, daß sie eine dichtende Anlage und eine Übertragung der Rotationskräfte von der Welle 3 gewährleistet. Zusätzlich muß bei einem Druckanstieg im Raum 6 eine Axialverschiebung auf der Welle 3 zugelassen werden, welches durch die große Fläche der in axialer Richtung projezierten scheibenförmigen Ringfläche in sehr begünstigender Weise unterstützt wird.

Den Druckaufbau in Raum 6 beschleunigt in erheblichem Maße auch der eine Drosselfunktion ausübende geringe Spalt 12, so daß selbst bei geringen Kräften große axiale Schubkräfte aufgebaut werden. Die Dichtwirkung ist damit auch nach einer längeren Betriebsdauer und unter Umständen in seinen Materialeigenschaften veränderten Dichtstoffen weiterhin gewährleistet. Ein Dichtungselement kann in entsprechender Bauweise auch ausschließlich oder zusätzlich am scheibenförmigen Element 9 angeordnet sein. Als Halterung 8 können auch normale Radialdichtringe, O-Ringe oder andere bekannte, mit geringen Kräften an der Welle anliegende Dichtmittel Verwendung finden.

## Patentansprüche

1. Wellenabdichtung, bestehend aus einer Hauptdichtung, insbesondere einer Gleitringdichtung, und einer nachgeordneten Hilfsdichtung, wobei die Hilfsdichtung beim Versagen der Hauptdichtung die Dichtfunktion übernimmt, die Hilfsdichtung als ein axial verschiebbares, die Welle umgebendes Element ausgebildet ist und unter dem Druck des abzusperrenden Fluids dichtend an einem Gehäuseteil anliegt, **dadurch gekennzeichnet, daß** die Hilfsdichtung als ein mit der Welle rotierendes, scheibenförmiges Element (9) ausgebildet ist, daß zwischen einem Außendurchmesser des scheibenförmigen Elementes (9) und einem umgebenden Raum (6, 6.1) ein enger Drosselspalt ausgebildet ist und daß das scheibenförmige Element (9) unter Druckbelastung relativ zur Welle (3) axial verschieblich gleitet und dichtend an einer Wandfläche des Raumes (6.1) anliegt.

2. Wellenabdichtung nach Anspruch 1, **dadurch gekennzeichnet, daß** das scheibenförmige Element (9) über eine große ringförmige Fläche verfügt.

3. Wellenabdichtung nach Anspruch 1 oder 2, **dadurch gekennzeichnet, daß** am scheibenförmigem Element (9) und/oder an einer in Verschieberichtung gegenüberliegenden Wandfläche ein Dichtungselement angeordnet ist.

4. Wellenabdichtung nach Anspruch 3, **dadurch gekennzeichnet, daß** eine Weichdichtung am scheibenförmigen Element (9) und/oder an einer gegenüberliegenden Wandfläche angebracht ist.

5. Wellenabdichtung nach einem der Ansprüche 1 bis 4, **dadurch gekennzeichnet, daß** das scheibenförmige Element (9) und/oder eine damit verbundene Halterung (8) mit einem ein Drehmoment übertragenden Gleitsitz auf der Welle (3) befestigt ist.

6. Wellenabdichtung nach einem der Ansprüche 1 bis 5, **dadurch gekennzeichnet, daß** zwischen scheibenförmigem Element (9) und einem rotierendem Bauteil ein reibschlüssig anliegender und in Axialrichtung verschiebbarer Dichtungsring (10) ein Drehmoment überträgt.

7. Wellenabdichtung nach einem der Ansprüche 1 bis 6, **dadurch gekennzeichnet, daß** der das scheibenförmige Element (9) umgebende Raum mit einer Überwachungseinrichtung (15) versehen und/oder verbunden ist.

8. Wellenabdichtung (6) nach einem der Ansprüche 1 bis 7, **dadurch gekennzeichnet, daß** scheibenförmige Element (9) als Spritzring ausgebildet ist.

## Claims

1. Shaft seal, consisting of a main seal, in particular a mechanical face seal, and an auxiliary seal arranged downstream, the auxiliary seal taking over the sealing function if the main seal fails, the auxiliary seal being designed as an axially displaceable element which surrounds the shaft and bearing in a sealing manner against a housing part under the pressure of the fluid to be shut off, **characterized in that** the auxiliary seal is designed as a disc-shaped element (9) rotating with the shaft, **in that** a narrow choke gap is formed between an outside diameter of the disc-shaped element (9) and a surrounding space (6, 6.1), and **in that** the disc-shaped element (9), under pressure load, slides in an axially displaceable manner relative to the shaft (3) and bears in a sealing manner against a wall surface of the space (6.1).

2. Shaft seal according to Claim 1, **characterized in that** the disc-shaped element (9) has a large annular surface.

3. Shaft seal according to Claim 1 or 2, **characterized in that** a sealing element is arranged on the disc-shaped element (9) and/or on an opposite wall surface in the displacement direction.

4. Shaft seal according to Claim 3, **characterized in that** a compressible seal is attached to the disc-shaped element (9) and/or to an opposite wall surface.

5. Shaft seal according to one of Claims 1 to 4, **characterized in that** the disc-shaped element (9) and/or a holder (8) connected thereto is fastened to the shaft (3) by means of a sliding fit transmitting a torque.

6. Shaft seal according to one of Claims 1 to 5, **characterized in that** a sealing ring (10) which is in frictional contact and is displaceable in the axial direction transmits a torque between the disc-shaped element (9) and a rotating component.

7. Shaft seal according to one of Claims 1 to 6, **characterized in that** the space surrounding the disc-shaped element (9) is provided with and/or connected to a monitoring device (15).

8. Shaft seal according to one of Claims 1 to 7, **characterized in that** the disc-shaped element (9) is designed as a splash ring.

## Revendications

1. Joint d'étanchéité pour arbre, se composant d'un joint d'étanchéité principal, notamment d'un joint d'étanchéité par bague glissante, et d'un joint d'étanchéité auxiliaire disposé derrière, le joint d'étanchéité auxiliaire reprenant la fonction d'étanchéité dans le cas d'une défaillance du joint d'étanchéité principal, le joint d'étanchéité auxiliaire étant réalisé sous la forme d'un élément coulissant axialement, entourant l'arbre, et s'appliquant de manière étanche contre une partie du boîtier sous l'effet de la pression du fluide à bloquer, **caractérisé en ce que** le joint d'étanchéité auxiliaire est réalisé sous la forme d'un élément (9) en forme de rondelle, tournant avec l'arbre, **en ce qu'**entre un diamètre extérieur de l'élément (9) en forme de rondelle et un espace périphérique (6, 6.1), est réalisée une fente d'étranglement étroite et **en ce que** l'élément en forme de rondelle (9) glisse de manière coulissant axialement par rapport à l'arbre (3) par sollicitation par pression et s'applique de manière étanche contre une surface de paroi de l'espace (6.1).

2. Joint d'étanchéité pour arbre selon la revendication 1, **caractérisé en ce que** l'élément en forme de rondelle (9) dispose d'une grande surface annulaire.

3. Joint d'étanchéité pour arbre selon la revendication 1 ou 2, **caractérisé en ce qu'**un élément d'étanchéité est disposé sur l'élément (9) en forme de rondelle et/ou sur une surface de paroi opposée dans la direction du coulissement.

4. Joint d'étanchéité pour arbre selon la revendication 3, **caractérisé en ce qu'**un joint d'étanchéité souple est appliqué sur l'élément (9) en forme de rondelle et/ou sur une surface de paroi opposée.

5. Joint d'étanchéité pour arbre selon l'une quelconque des revendications 1 à 4, **caractérisé en ce que** l'élément (9) en forme de rondelle et/ou une fixation (8) connectée à celui-ci est fixé(e) sur l'arbre (3) avec un ajustement par coulissement transférant un couple.

6. Joint d'étanchéité pour arbre selon l'une quelconque des revendications 1 à 5, **caractérisé en ce qu'**entre l'élément (9) en forme de rondelle et un composant rotatif, une bague d'étanchéité (10) s'appliquant par engagement de friction et pouvant coulisser dans la direction axiale transmet un couple.

7. Joint d'étanchéité pour arbre selon l'une quelconque des revendications 1 à 6, **caractérisé en ce que** l'espace entourant l'élément (9) en forme de rondelle est pourvu d'un et/ou est connecté à un dispositif de surveillance (15).

8. Joint d'étanchéité pour arbre selon l'une quelconque des revendications 1 à 7, **caractérisé en ce que** l'élément (9) en forme de rondelle est réalisé en tant que bague d'injection.
